# EUROPÄISCHE PATENTSCHRIFT

(11) **EP 4 411 344 B1**
(45) Veröffentlichungstag und Bekanntmachung des Hinweises auf die Patenterteilung: **15.07.2026**
(21) Anmeldenummer: 24154570.6
(22) Anmeldetag: 30.01.2024
(51) Int. Cl.: G01N 21/03, G01N 21/3504, G01N 21/33, G01S 17/88, G01N 21/17, G01N 21/31

(54) **OPTISCHE MESSEINRICHTUNG ZUR KONZENTRATIONSBESTIMMUNG VON MESSGAS IN EINEM PROBEGAS DURCH LICHTABSORPTION**
OPTICAL MEASURING DEVICE FOR DETERMINING THE CONCENTRATION OF A MEASURED GAS IN A SAMPLE GAS BY LIGHT ABSORPTION
DISPOSITIF DE MESURE OPTIQUE POUR DÉTERMINER LA CONCENTRATION D'UN GAZ DE MESURE DANS UN GAZ ÉCHANTILLON PAR ABSORPTION DE LUMIÈRE

(30) Priorität: 06.02.2023 DE 102023102768
(43) Veröffentlichungstag der Anmeldung: 07.08.2024
(73) Patentinhaber: Dräger Safety AG & Co. KGaA, 23560 Lübeck (DE)
(72) Erfinder: Wahlbrink, Günter, 23558 Lübeck (DE); Batchadji, Raulin Edgar, 23558 Lübeck (DE); Flammiger, Andreas, 23558 Lübeck (DE); Tröllsch, Arne, 23558 Lübeck (DE); Sunkel, Jörn, 23558 Lübeck (DE); Lölsberg, Jonas, 23558 Lübeck (DE)

(56) Entgegenhaltungen:
- CN-A- 105 510 275
- CN-U- 203 479 698
- GB-A- 2 391 310
- US-A- 5 923 035
- US-A1- 2007 064 230
- US-A1- 2008 259 340
- US-A1- 2016 187 542
- US-A1- 2018 180 588
- WENSKE ET AL: "Spiegeloptik", SPIEGELOPTIK. ENTWURF UND HERSTELLUNG ASTRONOMISCHERSPIEGELSYSTEME, XX, XX, 1 January 1988 (1988-01-01), pages 76 - 79, XP002243800

## Beschreibung

Die vorliegende Erfindung betrifft eine optische Messeinrichtung zur Konzentrationsbestimmung von Messgas in einem Probegas durch Lichtabsorption.

Optische Messeinrichtungen zur Konzentrationsbestimmung von Messgas in einem Probegas durch Lichtabsorption sind bekannt. Diese umfassen üblicherweise eine Lichtquelle, einen Abschnitt (zum Beispiel eine optische Küvette), in dem sich das Probegas befindet und einen Strahlungsdetektor, der durch einen oder mehrere optische Bandpassfilter hindurch Licht einer Messwellenlänge detektiert. Die Absorption des Lichts durch das nachzuweisende Messgas in dem Probegas ist dabei ein Maß für dessen Konzentration. Die Intensität des am Strahlungsdetektor erfassten Lichts wird insbesondere durch die Absorptionseigenschaften des Probegases und durch die optische Weglänge durch den Abschnitt, in dem sich das Probegas befindet, bestimmt.

Im Allgemeinen besteht das Bedürfnis, eine optische Messeinrichtung bereitzustellen, die besonders stabile Messwerte liefert.

Insofern ist bei einer aus DE 197 13 928 C1 bekannten optischen Messeinrichtung eine Lichtquelle vorgesehen, die Licht durch ein infrarotdurchlässiges Fenster auf einen Planspiegel außerhalb eines Gehäuses der optischen Messeinrichtung wirft. Der Planspiegel reflektiert das Licht, so dass es durch einen anderen Bereich des infrarotdurchlässigen Fensters wieder in das Gehäuse eintritt, wo es auf einen Strahlteiler fällt. Um möglichst stabile Messwerte zu liefern, sind vor einem Strahlungsdetektor optische Konzentratoren zur Strahlungsbündelung vorgesehen, die das Licht in Richtung des Strahlungsdetektors bündeln. Hierdurch wird eine gleichförmige Strahlungsverteilung in der Ebene des Strahlungsdetektors erzeugt.

Nachteilhaft an dieser bekannten Messeinrichtung ist, dass der optische Konzentrator eine bestimmte Mindestlänge aufweisen muss, um die gleichförmige Strahlungsverteilung wirksam zu erreichen. Dies führt zu einem relativ großen Bauraum der bekannten optischen Messeinrichtung.

Aus CN 203 479 698 U ist eine optische Messeinrichtung gemäß Oberbegriff des Patentanspruchs 1 bekannt.

Aus CN 105 510 275 A ist eine tragbare Gasmessvorrichtung bekannt. Die Gasmessvorrichtung umfasst ein Fenster, einen ersten 45-Grad-Ebenenspiegel, ein außeraxialen Parabolspiegel, ein Hilfshyperboloidreflektor, ein Hauptparaboloidreflektor, der mit einem zentralen Durchgangsloch versehen ist, ein optisches Filter und ein Avalanche-Photodetektor, welche nacheinander in horizontaler Richtung von links nach rechts angeordnet sind, sowie einen zweiten 45-Grad-Ebenenspiegel. Ferner sind ein Lichtwellenleiter-Stecker und ein mit dem Lichtwellenleiter-Stecker verbundener Lichtwellenleiter-Strahlkombinierer im Gehäuse unterhalb des außeraxialen Parabolspiegels angeordnet. Vier abstimmbare Halbleiterlasereinheiten mit unterschiedlichen abstimmbaren Frequenzbereichen sind im Gehäuse integriert und mit dem Lichtwellenleiter-Strahlkombinierer verbunden.

Aus US 5 923 035 A ist ein Messgerät zur Bestimmung der Konzentration von Gasen mit zwei identischen Strahlungsquellen und zwei Strahlungsdetektoren bekannt. Eine Strahlungsquelle ist durch ein infrarotlichtdurchlässiges Fenster auf einen Planspiegel außerhalb eines gasdichten Gehäuses gerichtet, und der vom Planspiegel reflektierte Strahlengang fällt durch das infrarotlichtdurchlässige Fenster auf einen Strahlenteiler. Der Strahlenteiler teilt sowohl die vom Planspiegel reflektierte Strahlung der ersten Strahlungsquelle als auch die Strahlung der zweiten Strahlungsquelle auf zwei Strahlungsdetektoren auf. Der erste Strahlungsdetektor wird als Messdetektor und der zweite Strahlungsdetektor als Referenzdetektor verwendet.

Weitere optische Messeinrichtungen sind aus DE 196 11 290 C2, DE 23 20 166 A1, US 5 255 073 A, EP 3 504 535 B1, WO 2016/ 200 274 A1, CN 2 09 182 227 U und JP S55- 27 946 A sowie aus GB 2 391 310 A, US 2018 / 180 588 A1, US 2007 / 064 230 A1 und aus der Veröffentlichung Wenske et al.: "Spiegeloptik", Spiegeloptik. Entwurf und Herstellung Astronomischer Spiegelsystem, 01. Januar 1988, bekannt.

Der vorliegenden Erfindung liegt die Aufgabe zu Grunde, eine alternative optische Messeinrichtung bereitzustellen, insbesondere eine optische Messeinrichtung, die eine kompakte Bauform aufweist.

Diese und weitere Aufgaben werden gelöst durch den Gegenstand des Patentanspruchs 1.

Die abhängigen Ansprüche stellen vorteilhafte Ausgestaltungen bereit.

Erfindungsgemäß wird eine optische Messeinrichtung zur Konzentrationsbestimmung von Messgas in einem Probegas durch Lichtabsorption vorgeschlagen. Die optische Messeinrichtung umfasst eine Lichtquelle, einen Umlenkspiegel, einen Primärspiegel, einen Sekundärspiegel und einen Strahlungsdetektor. Ein Abschnitt zwischen Lichtquelle und Umlenkspiegel ist eingerichtet, das Probegas aufzunehmen. Die Lichtquelle ist eingerichtet, Licht in Richtung des Umlenkspiegels abzustrahlen. Der Umlenkspiegel ist eingerichtet, als Kollimator für einfallendes Licht zu wirken und das einfallende Licht in Richtung des Primärspiegels umzulenken. Der Primärspiegel und der Sekundärspiegel sind eingerichtet, das von dem Umlenkspiegel umgelenkte Licht auf den Strahlungsdetektor zu lenken.

Die vorgeschlagene optische Messeinrichtung löst die erfindungsgemäße Aufgabe, indem ein optisches System bereitgestellt wird, in welchem der Strahlengang ausgehend von der Lichtquelle über den Umlenkspiegel, den Primärspiegel und den Sekundärspiegel hin zum Strahlungsdetektor (insbesondere in der genannten Reihenfolge) verläuft. Insbesondere durch die Bereitstellung eines Primärspiegels und eines Sekundärspiegels, d.h. durch Bereitstellung einer Teleskopanordnung als Teil des optischen Systems, kann vorteilhaft eine kompakte Bauweise erzielt werden, wobei das optische System zugleich vorteilhaft eine hohe Brennweite aufweist. Eine hohe Brennweite bietet den Vorteil, dass eine Einfallswinkelverteilung auf dem Strahlungsdetektor schmal, d.h. klein ist. Dies verbessert die Messeigenschaften der optischen Messeinrichtung, insbesondere bei Verwendung eines oder mehrerer Bandpassfilter oder Doppelbandpassfilter.

Ein weiterer Vorteil der erfindungsgemäßen optischen Messeinrichtung ist, dass das Licht den Abschnitt zur Aufnahme des Probegases zweimal durchläuft, da der Umlenkspiegel das von der Lichtquelle abgestrahlte Licht in Richtung des Primärspiegels umlenkt und so der Abschnitt ein zweites Mal von dem Licht durchlaufen wird. Auf diese Weise kann eine Absorptionsstrecke gegenüber einer Anordnung, in der keine Umlenkung stattfindet, verdoppelt werden. Dies wiederum erlaubt eine vorteilhafte Steigerung der Messempfindlichkeit der optischen Messeinrichtung.

Unter einem Probegas wird erfindungsgemäß ein Gas oder Gasgemisch verstanden, welches ein oder mehrere Messgase als Bestandteil des Probegases aufweisen kann. Beispielsweise kann das Probegas Luft sein und das Messgas ein Kohlenwasserstoff sein.

Eine Lichtquelle bezeichnet erfindungsgemäß ein Bauelement, welches dazu eingerichtet ist, Licht aufweisend Ultraviolettstrahlung und/oder Infrarotstrahlung zu emittieren. Licht bezeichnet im Sinne der Erfindung folglich elektromagnetische Strahlung, die zumindest Ultraviolettstrahlung und/oder Infrarotstrahlung umfasst.

Unter Ultraviolettstrahlung wird erfindungsgemäß elektromagnetische Strahlung mit einer Wellenlänge von 10 nm bis 400 nm, vorzugsweise von 100 nm bis 380 nm verstanden.

Unter Infrarotstrahlung wird erfindungsgemäß elektromagnetische Strahlung mit einer Wellenlänge von 0,750 µm bis 1000 µm verstanden.

Die im Rahmen der Erfindung verwendete Wellenlänge oder ein im Rahmen der Erfindung verwendeter Wellenlängenbereich kann abhängig von dem oder den zu detektierenden Messgasen vorbestimmt sein.

Die erfindungsgemäße Lichtquelle kann das Licht breitbandig emittieren - beispielsweise, indem die Lichtquelle als eine Glühlampe ausgebildet ist - oder schmalbandig emittieren, beispielsweise indem die Lichtquelle als eine lichtemittierende Diode oder als eine Laserdiode ausgebildet ist.

Die erfindungsgemäße Lichtquelle ist unmittelbar oder mittelbar dazu eingerichtet, das Licht in Richtung des Umlenkspiegels abzustrahlen. Beispielsweise kann die Lichtquelle dazu einen Reflektor, wie einen Hohlspiegel, oder eine Linse aufweisen.

Unter einem Strahlungsdetektor wird erfindungsgemäß ein Bauelement verstanden, das dazu eingerichtet ist, Licht im ultravioletten und/oder infraroten Wellenlängenbereich, insbesondere der Messwellenlänge, zu detektieren. Hierzu weist der Strahlungsdetektor ein Detektorelement auf.

Der Strahlungsdetektor kann einen Interferenzfilter aufweisen, so dass die erfindungsgemäße optische Messeinrichtung in einer bevorzugten Ausgestaltung eine nichtdispersiven optische Messeinrichtung, insbesondere einen nichtdispersiven Infrarotanalysator betrifft, der durch die Verwendung eines gasspezifischen Interferenzfilters mit Bandpasscharakteristik wenig querempfindlich auf neben dem oder den Messgasen in dem Probegas enthaltene Gase ist.

Das Detektorelement des Strahlungsdetektors kann beispielsweise als ein Halbleiterdetektor, ein pyroelektrischer Detektor, ein thermoelektrischer Detektor oder als ein thermischer Detektor ausgestaltet sein.

Zur Berücksichtigung und Kompensation von Umgebungseinflüssen können in oder an der optischen Messeinrichtung, beispielsweise am Strahlungsdetektor, zusätzliche Sensoren, beispielsweise ein Temperatursensor, ein Feuchtesensor und/oder ein Drucksensor vorgesehen sein.

Der erfindungsgemäße Umlenkspiegel wirkt als Kollimator für einfallendes Licht, worunter erfindungsgemäß verstanden wird, dass das einfallende Licht im Wesentlichen kollinear zu einer optischen Achse des Umlenkspiegels in Richtung des Primärspiegels umgelenkt reflektiert wird.

Der Abschnitt zwischen Lichtquelle und Umlenkspiegel ist zur Aufnahme des Probegases eingerichtet und weist dabei eine optische Weglänge auf. Der Abschnitt kann durch eine Messküvette bereitgestellt werden, wobei der Abschnitt seitlich durch Seitenwände der Messküvette begrenzt sein kann und Probegas durch eine Öffnung der Messküvette in den Abschnitt hineingelangen kann. Alternativ kann der Abschnitt auch durch ein offenes Messsystem bereitgestellt werden, d.h. im Wesentlichen ohne Seitenwände.

Die optischen Elemente (d.h. die Bauteile und Bauelemente, welche die Lichtausbreitung beeinflussen), insbesondere Umlenkspiegel, Primärspiegel, Sekundärspiegel und Reflektor oder Linse, wenn als Teil der Lichtquelle vorhanden, können beispielsweise aus Glas, Kunststoff, Metall, einschließlich Halbmetall (z.B. Silizium) oder sonstigen Materialien (z.B. Chalkogeniden) hergestellt werden.

Vorzugsweise bilden der erfindungsgemäße Primärspiegel und der erfindungsgemäße Sekundärspiegel zusammen ein Abbildungssystem, welches das einfallende Licht auf den Strahlungsdetektor abbildet. Vorzugsweise ist der Strahlungsdetektor dabei im Bereich eines Fokus des Abbildungssystems angeordnet. Alternativ kann der Strahlungsdetektor außerhalb eines Fokus angeordnet sein.

Erfindungsgemäß sind jeweilige optische Achsen von Lichtquelle, Umlenkspiegel, Primärspiegel und Sekundärspiegel kollinear zueinander ausgebildet.

Durch diese Anordnung der optischen Elemente wird eine Faltung des Strahlengangs in sich selbst erreicht, indem das Licht, das im Wesentlichen kollinear von dem Umlenkspiegel zum Primärspiegel gelangt, vom Primärspiegel zum Sekundärspiegel und von diesem zum Strahlungsdetektor reflektiert wird. Hierdurch kann eine besonders kompakte Bauform erzielt werden, während eine hohe Brennweite gewährleistet ist.

Die kollineare Ausbildung der jeweiligen optischen Achsen von Lichtquelle, Umlenkspiegel, Primärspiegel und Sekundärspiegel führt ferner zu einer symmetrischen Einfallswinkelverteilung, so dass die Strahlenverteilung homogen ist. Dies verbessert vorteilhaft die Messeigenschaften der optischen Messeinrichtung.

Besonders bevorzugt liegt ferner der Strahlungsdetektor auf der optischen Achse von Primärspiegel und Sekundärspiegel.

Unter einer optischen Achse wird eine jeweilige gedachte Symmetrielinie verstanden, die durch das Krümmungszentrum des jeweiligen optischen Elements (Lichtquelle, Umlenkspiegel, Primärspiegel, Sekundärspiegel) läuft. Vorzugsweise sind die jeweiligen optischen Achsen und die Mittelachse der optischen Messeinrichtung identisch.

Erfindungsgemäß sind die Lichtquelle, der Primärspiegel, der Sekundärspiegel und der Strahlungsdetektor in einem gemeinsamen Gehäuse angeordnet, wobei der Umlenkspiegel außerhalb des Gehäuses angeordnet ist und wobei das Gehäuse ein lichtdurchlässiges Fenster umfasst, das im Strahlengang zwischen Lichtquelle und Umlenkspiegel angeordnet ist.

Auf diese Weise können empfindliche Komponenten der optischen Messeinrichtung durch ein Gehäuse geschützt werden, wodurch die optische Messeinrichtung robust ist. Dies ist insbesondere für den Einsatz der optischen Messeinrichtung in rauer Umgebung, beispielsweise im Off-shore-Bereich oder in industrieller Umgebung vorteilhaft.

Das lichtdurchlässige Fenster dient dazu, das Gehäuse im Bereich des Strahlengangs körperlich abzuschließen, dabei jedoch Licht durchzulassen.

Dazu kann das Fenster ein lichtdurchlässiges, insbesondere für Ultraviolettstrahlung und/oder Infrarotstrahlung durchlässiges Material umfassen. Ein derartiges Material kann beispielsweise ein Glas, ein Kunststoff oder ein Mineral, beispielsweise Korund ("Saphirglas") sein. Das Fenster kann beispielsweise als Scheibe oder als Folie ausgestaltet sein. Besonders bevorzugt schließt das Fenster gasdicht zum umliegenden Gehäuse ab.

Besonders bevorzugt ist das Gehäuse druckfest gekapselt, so dass die optische Messanordnung explosionsgeschützt bereitgestellt werden kann.

In Kombination mit der Ausbildung der jeweiligen optischen Achsen von Lichtquelle, Umlenkspiegel, Primärspiegel und Sekundärspiegel kollinear zueinander kann außerdem eine besonders effiziente Nutzung des Fensters erreicht werden. Eine Lichtaustrittsfläche, durch die Licht von der Lichtquelle in Richtung des Umlenkspiegels aus dem Fenster austritt und die in diesem Fall im Wesentlichen kreisförmig ist, ist in dieser Ausgestaltung konzentrisch zu einer Lichteintrittsfläche, durch die Licht von dem Umlenkspiegel in Richtung des Primärspiegels eintritt und die in dieser Ausgestaltung im Wesentlichen ringförmig ist. Die ringförmige Fläche umgibt bei geeigneter Ausgestaltung der optischen Messeinrichtung die kreisförmige Fläche mit keinem oder nur geringem Spalt dazwischen, so dass im Wesentlichen die gesamte Fläche des Fensters für einen Lichtdurchgang nutzbar ist. Dies ist bei aus dem Stand der Technik bekannten Messeinrichtungen nicht der Fall. Bei diesen sind Lichteintrittsfläche und Lichtaustrittsfläche beispielsweise elliptisch und liegen versetzt in der Ebene des Fensters nebeneinander, so dass die übrige Fläche des Fensters ungenutzt bleibt. Hierdurch müssen bekannte Messeinrichtung einen großen Durchmesser aufweisen und sind folglich teurer in der Herstellung. Dementsprechend ist die erfindungsgemäße optische Messeinrichtung vorteilhaft günstiger in der Herstellung.

Vorzugsweise ist ein Abstand zwischen Lichtquelle und Umlenkspiegel entlang der optischen Achse des Umlenkspiegels veränderlich, um eine Absorptionslänge anzupassen.

Hierdurch kann die optische Messeinrichtung auf einfache Weise hinsichtlich der Absorptionslänge verändert werden, was eine Anpassung der optischen Messeinrichtung an verschiedene Messgase ermöglicht.

Bevorzugt ist dabei die Position des Umlenkspiegels gegenüber dem Gehäuse veränderlich, um den Abstand zu verändern.

Beispielsweise kann der Umlenkspiegel in einer Linearführung aufgenommen sein, beispielsweise in einem gehäuseseitigen Abstandshalter, der eine entsprechende Linearführung bereitstellt. Durch Veränderung der Position des Umlenkspiegels in der Linearführung kann der Abstand verändert werden.

In einem weiteren Beispiel kann der Umlenkspiegel durch einen gehäuseseitigen Abstandshalter aufgenommen werden, wobei der Abstandshalters gegen einen anderen Abstandshalter anderer Länge austauschbar und somit längenveränderlich ist oder wobei der Abstandshalter durch zwischen Abstandshalter und Umlenkspiegel einsetzbare Adapterstücke längenveränderlich ist. Durch Veränderung der Länge des Abstandshalters kann der Abstand verändert werden.

Vorzugsweise weist der Umlenkspiegel eine vorbestimmte Krümmung auf, die mit einer ersten Absorptionslänge korrespondiert. Ferner vorzugsweise ist der Umlenkspiegel gegen einen anderen Umlenkspiegel mit einer anderen vorbestimmten Krümmung austauschbar, wobei die andere vorbestimmte Krümmung an eine zweite Absorptionslänge angepasst ist.

In einer zu der austauschbaren Bereitstellung des Umlenkspiegels alternativen Ausgestaltung kann der Umlenkspiegel eine veränderliche Krümmung aufweisen, welche an die veränderte Absorptionslänge anpassbar ist. Derartige Umlenkspiegel sind bekannt. So gibt es beispielsweise elastische Spiegel, beispielsweise Silikonspiegel, die mit einem Fluid gefüllt oder füllbar sind, wobei durch entsprechende Veränderung einer Fluidfüllmenge die Krümmung des Spiegels verändert werden kann.

Vorzugsweise sind der Primärspiegel und der Sekundärspiegel als eine Cassegrain-Teleskopanordnung ausgebildet.

Im Rahmen der Erfindung wurde erkannt, dass eine derartige Cassegrain-Teleskopanordnung eine besonders hohe Brennweite bei gleichzeitig kompakter Bauweise in Richtung der Strahlenausbreitung aufweist.

Unter einer Cassegrain-Teleskopanordnung werden insofern alle Bauformen von Teleskopanordnungen verstanden, die auf einer Cassegrain-Bauweise basieren, einschließlich einer Schmidt-Cassegrain-Teleskopanordnung, einer Maksutov-Teleskopanordnung, einer Hypergraph-Teleskopanordnung und einer Ritchey-Chretien-Cassegrain-Teleskopanordnung.

Besonders bevorzugt weist die Cassegrain-Teleskopanordnung neben dem Primärspiegel und dem Sekundärspiegel keine weiteren optischen Elemente, wie beispielsweise Linsen oder Korrektoren auf, was den Aufbau der optischen Messeinrichtung vorteilhaft vereinfacht.

Bei der Cassegrain-Teleskopanordnung können Primärspiegel und Sekundärspiegel im Wesentlichen beliebige Formen aufweisen, beispielsweise kann eine jeweilige optisch wirksame Fläche sphärisch oder asphärisch, insbesondere parabolisch, hyperbolisch, elliptisch oder planar sein.

Besonders bevorzugt ist der Sekundärspiegel nicht plan.

Vorzugsweise ist der Primärspiegel konkav und der Sekundärspiegel konvex ausgebildet. Besonders bevorzugt ist der Primärspiegel parabolisch und der Sekundärspiegel hyperbolisch ausgebildet (klassische Cassegrain-Teleskopanordnung) oder der Primärspiegel hyperbolisch und der Sekundärspiegel hyperbolisch ausgebildet (Ritchey-Chrétien-Cassegrain-Teleskopanordnung).

Besonders bevorzugt sind der Primärspiegel und der Sekundärspiegel als eine Cassegrain-Teleskopanordnung ausgebildet, während die jeweiligen optischen Achsen von Lichtquelle, Umlenkspiegel, Primärspiegel und Sekundärspiegel kollinear zueinander ausgebildet sind. In anderen Worten ist es bevorzugt, eine symmetrische Cassegrain-Teleskopanordnung bereitzustellen.

Vorzugsweise weist der Primärspiegel eine mittige Aussparung auf, um das von dem Sekundärspiegel umgelenkte Licht durch die mittige Aussparung hindurch auf den Strahlungsdetektor zu lenken.

In anderen Worten ist in dieser besonders bevorzugten Variante die Cassegrain-Teleskopanordnung so ausgestaltet, dass ein Fokus hinter dem Primärspiegel liegt, was vorteilhaft eine besonders hohe Brennweite ermöglicht. Vorzugsweise weist der Primärspiegel eine Halterung zur Aufnahme des Strahlungsdetektors auf, welche besonders bevorzugt in der Aussparung angeordnet ist. Dies erlaubt eine besonders einfache Ausrichtung des Strahlungsdetektors zum Primärspiegel.

Ferner, erfindungsgemäß, umfasst die optische Messeinrichtung eine zweite Lichtquelle, die eingerichtet ist, ein zweites Licht in Richtung des Strahlungsdetektors abzustrahlen.

Das zweite Licht kann der Wellenlänge bzw. dem Wellenlängenbereich der Lichtquelle entsprechen oder eine andere Wellenlänge bzw. einen anderen Wellenlängenbereich aufweisen.

Die Bereitstellung einer zweiten Lichtquelle erlaubt vorteilhaft die Kompensation einer (z.B. thermisch oder alterungsbedingten) Drift des Strahlungsdetektors.

Ferner, erfindungsgemäß, ist die zweite Lichtquelle kollinear zu einer Mittelachse des Strahlungsdetektors angeordnet. Auf diese Weise kann der Strahlungsdetektor im Wesentlichen senkrecht bestrahlt werden, was vorteilhaft zu einer symmetrischen Einfallswinkelverteilung führt.

Beispielsweise kann der Sekundärspiegel ein mittige Aussparung aufweisen. Die zweite Lichtquelle kann in oder hinter dieser Aussparung angeordnet sein und den Strahlungsdetektor unter vorzugsweise senkrechtem Einfall bestrahlen. Vorzugsweise umfasst die optische Messeinrichtung einen zweiten Strahlungsdetektor und einen Strahlteiler, wobei der Strahlteiler im Strahlengang vor dem Strahlungsdetektor angeordnet ist, um einen Teil des Lichts in Richtung des Strahlungsdetektors zu leiten und einen anderen Teil des Lichts in Richtung des zweiten Strahlungsdetektors zu leiten.

Auf diese Weise kann mit geringfügigem baulichen Mehraufwand gleichzeitig die Konzentration eines weiteren Messgases bestimmt werden. Folglich kann die Funktionalität der optischen Messeinrichtung vorteilhaft verbessert werden. Der Strahlteiler ist ein optisches Element, welches das einfallende Licht in wenigstens einen (ersten) Teil und einen anderen (zweiten) Teil aufteilt. Es kann ferner ein weiterer (dritter) Teil des Lichts absorbiert werden. Der Strahlteiler kann beispielsweise als ein teildurchlässiger Spiegel ausgestaltet sein oder aus Prismen aufgebaut sein.

Besonders bevorzugt ist der Strahlteiler als ein dichroitischer oder trichroitischer Strahlteiler ausgebildet.

Ein dichroitischer oder trichroitischer Strahlteiler beeinflusst die spektrale Zusammensetzung des einfallenden Licht, indem das transmittierte Licht ein anderes Spektrum aufweist als das von dem Strahlteiler reflektierte Licht. Das reflektierte Licht kann beispielsweise zum zweiten Strahlungsdetektor gelangen und somit einem Spektrum entsprechen, das zur Messwellenlänge oder zum Messwellenlängenbereich (bevorzugt beidseitig) benachbart ist. Das transmittierte Licht kann beispielsweise zum Strahlungsdetektor gelangen und somit der Messwellenlänge bzw. dem Messwellenlängenbereich entsprechen.

Ein dichroitischer oder trichroitischer Strahlteiler kann beispielsweise als Spiegel mit alternierendem Schichtaufbau bereitgestellt werden, wobei metallische Schichten und dielektrische Schichten alternierend übereinander angeordnet sein können. In einer anderen Variante können niedrigbrechende mit hochbrechenden dielektrischen Schichten alternierend übereinander angeordnet sein. Durch geeignete Wahl des Schichtaufbaus kann die Bandbreite des transmittierten Lichts beeinflusst werden.

Ein weiterer Vorteil der Bereitstellung eines dichroitischen oder trichroitischen Strahlteilers ist dessen geringer Absorptionsgrad, welcher die Lichtintensität vorteilhaft besonders wenig beeinflusst.

Vorzugsweise ist der Strahlungsdetektor und/oder der zweite Strahlungsdetektor ein Mehrkanaldetektor.

Unter einem Mehrkanaldetektor wird ein Strahlungsdetektor mit wenigstens zwei separaten Detektorelementen eingangs beschriebener Art verstanden, welche jeweils ein Detektorsignal generieren. Beispielsweise kann ein Detektorelement eingerichtet sein, die Messwellenlänge bzw. den Messwellenlängenbereich detektieren und ein anderes Detektorelement eingerichtet sein, eine Referenzwellenlänge zu detektieren.

Auf diese Weise kann auf kompakte Weise ein Strahlungsdetektor (bzw. zweiter Strahlungsdetektor) bereitgestellt werden, der eingerichtet ist, mehrere Detektionssignale zu erzeugen. Dies kann vorteilhaft sein, um auch bei kompakter Bauweise eine Drift des Strahlungsdetektors zu kompensieren.

Beispielsweise kann ein Detektorelement nur Licht einer Wellenlänge oder eines Wellenlängenbereichs detektieren, die oder der von dem Messgas absorbiert wird und so einen Messdetektor bilden und ein anderes Detektorelement nur Licht aus einem spektral benachbarten Bereich, in welchem das Messgas nicht absorbiert, detektieren und so einen Referenzdetektor bilden. Das Verhältnis beider Detektionssignale ändert sich nur, wenn in dem Abschnitt zur Aufnahme des Probegases Messgas vorhanden ist. Verschmutzungen und andere nicht spektrale Änderungen der Strahlungsleistung wirken im Allgemeinen auf beide Strahlungsdetektoren gleichermaßen, so dass das Verhältnis in diesen Fall konstant bleibt.

Jedem Detektorelement kann ein Bandpassfilter oder ein Doppelbandpassfilter zugeordnet sein. Besonders bevorzugt weist das Detektorelement, das den Messdetektor bildet, ein Bandpass-Filterelement auf, welches Licht der Messwellenlänge oder des Messwellenlängenbereichs transmittiert. Ferner besonders bevorzugt weist das andere Detektorelement, das einen Referenzdetektor bildet, ein Doppelbandpass-Filterelement auf, welches Licht, das spektral zu beiden Seiten der Messwellenlänge oder des Messwellenlängenbereichs benachbart ist, transmittiert.

Vorzugsweise weist eine optische Fläche des Sekundärspiegels und/oder eine optische Fläche des Primärspiegels strukturierte Abschnitte auf, um eine Strahlenverteilung auf dem Strahlungsdetektor und/oder eine Strahlenverteilung auf dem zweiten Strahlungsdetektor zu beeinflussen, insbesondere die Strahlenverteilung zu vergrößern.

Auf diese Weise kann sichergestellt werden, dass der Strahlungsdetektor und/oder der zweite Strahlungsdetektor auf der gesamten erforderlichen Fläche, z.B. im Bereich des Detektorelements oder, im Fall des Mehrkanaldetektors, der Detektorelemente bestrahlt wird. Vorzugsweise sind die optischen Flächen so ausgelegt, dass die Strahlenverteilung den oder die Detektorelemente um einen vorbestimmten Bereich hinaus überragt. Damit kann im Fall einer Verschiebung des Strahlengangs aufgrund von Form- und Lagetoleranzen der optischen Messeinrichtung eine ausreichende Bestrahlung des Detektorelements oder der Detektorelemente sichergestellt werden.

Ferner weisen die strukturierten Abschnitte den Vorteil auf, dass durch Beeinflussung, insbesondere Vergrößerung, der Strahlenverteilung eine Homogenisierung der Strahlenverteilung eintritt, welche dazu führt, dass z.B. partielle Abschattungen im Strahlengang nicht lediglich punktuell und somit beispielsweise nur auf ein Detektorelement, sondern örtlich in der Ebene des Strahlungsdetektors, beispielsweise auf zwei Detektorelemente, verteilt auswirken. Insgesamt können somit die Messeigenschaften der optischen Messeinrichtung verbessert werden.

Unter einer optischen Fläche wird eine Fläche verstanden, die zur Beeinflussung des Strahlengangs eingerichtet ist und somit optisch wirksam ist. Eine optische Fläche des Sekundärspiegels ist somit insbesondere eine reflektierende Fläche des Sekundärspiegels. Entsprechend ist eine optische Fläche des Primärspiegels insbesondere eine reflektierende Fläche des Primärspiegels.

Die strukturierten Abschnitte können sich über die gesamte optische Fläche erstrecken oder auch nur einen Teil der optischen Fläche einnehmen. Bevorzugt ist die optische Fläche des Primärspiegels und/oder die optische Fläche des Sekundärspiegels vollständig mit strukturierten Abschnitten versehen, um die Strahlenverteilung möglichst wirksam zu beeinflussen.

Unter strukturierten Abschnitten werden Abschnitte der optischen Fläche verstanden, die eine von der Grundform der optischen Fläche (bspw. sphärisch, hyperbolisch oder parabolisch) abweichende Struktur aufweisen. Ein strukturierter Abschnitt kann in geometrischer Betrachtung beispielsweise eine Vertiefung oder Erhöhung mit vorbestimmter Form relativ zu der Grundform der optischen Fläche sein.

Fertigungstechnisch kann die geometrische Form des Primärspiegels und/oder des Sekundärspiegels beispielsweise durch ein urformendes oder umformendes Verfahren bereitgestellt werden. Beispielsweise kann der Primärspiegel und/oder der Sekundärspiegel durch ein urformendes Verfahren, wie Spritzgießen in seiner geometrischen Form bereitgestellt werden. In einem anderen Beispiel kann der Primärspiegel und/oder der Sekundärspiegel durch spanende Verfahren oder durch Oberflächenätzung mit strukturierten Abschnitten ausgebildet werden.

Besonders bevorzugt sind die strukturierten Abschnitte als Facetten und/oder als Rillen ausgebildet.

Unter einer Rille wird geometrisch eine längliche Vertiefung in der optischen Fläche verstanden. Das Profil der Vertiefung kann beispielsweise sphärisch oder asphärisch konvex sein.

Beispielsweise kann das Profil der Vertiefung im Wesentlichen U-förmig oder V-förmig sein.

Unter einer Facette wird geometrisch eine mehreckige (vorzugsweise sechseckige) Erhöhung oder Ausnehmung in der optischen Flächen verstanden. Die durch die Kanten der Facette begrenzte Facettenfläche kann wiederum (sphärisch oder asphärisch) konvex, (sphärisch oder asphärisch) konkav und/oder plan sein.

Bevorzugt ist die Facettenfläche sphärisch konkav, da derartig strukturierte Abschnitte besonders vorteilhaft hinsichtlich der Fertigung sind, während sie gleichzeitig zu einer besonders homogenen Ausleuchtung des Strahlungsdetektors (bzw. der Strahlungsdetektoren) beitragen.

Es kann lediglich der Primärspiegel oder der Sekundärspiegel Facetten und/oder Rillen aufweisen oder sowohl der Primärspiegel als auch der Sekundärspiegel Facetten und/oder Rillen aufweisen.

Bevorzugt ist, dass der Primärspiegel strukturierte Abschnitte in Form von Rillen aufweist, die in einer ersten Orientierung parallel zueinander verlaufen und dass der Sekundärspiegel strukturierte Abschnitte in Form von Rillen aufweist, die in einer zweiten Orientierung parallel zueinander verlaufen und wobei der Primärspiegel und der Sekundärspiegel so zueinander ausgerichtet sind, dass die erste Orientierung und die zweite Orientierung im Wesentlichen senkrecht zueinander sind. Hierdurch ist es möglich, dass eine im Wesentlichen rechteckige Strahlenverteilung auf dem Strahlungsdetektor (bzw. den Strahlungsdetektoren) erzeugt wird. Durch eine geeignete Ausgestaltung der strukturierten Abschnitte, bspw. durch geeignete Wahl des Krümmungsradius der Rillen, kann ein im Wesentlichen beliebig geformtes Rechteck erzeugt werden.

In einer alternativen Ausgestaltung ist bevorzugt, dass der Primärspiegel Facetten aufweist und der Sekundärspiegel keine strukturierte Oberfläche aufweist. Dies vereinfacht die Fertigung und Montage der optischen Messeinrichtung.

Vorzugsweise weist die optische Messeinrichtung ferner einen optischen Wellenleiter auf, der im Strahlengang vor dem Strahlungsdetektor angeordnet ist.

Unter einem optischen Wellenleiter wird insofern ein Bauteil verstanden, welches in den optischen Wellenleiter durch eine Eingangsöffnung eintretendes Licht bündelt und das so gebündelte Licht aus einer Ausgangsöffnung in Richtung des Strahlungsdetektors abgibt. Ein Beispiel für einen optischen Wellenleiter ist ein Hohlleiter oder ein Lichtwellenleiter.

Durch Mehrfachreflektion innerhalb des Wellenleiters kommt es vorteilhaft zu einer Homogenisierung der Lichtverteilung an der Ausgangsöffnung und somit auf dem Detektorelement (bzw. auf den Detektorelementen). Somit können die Messeigenschaften der optischen Messeinrichtung verbessert werden.

Vorzugsweise umfasst die optische Messeinrichtung ferner einen zweiten optischen Wellenleiter, der gleichartig zum optischen Wellenleiter ausgebildet sein kann, und der im Strahlengang vor dem zweiten Strahlungsdetektor angeordnet ist. Diese Ausgestaltung weist zum Wellenleiter analoge Vorteile auf.

Diese und weitere Merkmale und Vorteile ergeben sich auch aus der nachfolgenden Figurenbeschreibung. Dabei zeigt
- **Fig. 1**: ein Ausführungsbeispiel einer nicht erfindungsgemäßen optischen Messeinrichtung,
- **Fig. 2**: ein Ausführungsbeispiel einer erfindungsgemäßen optischen Messeinrichtung,
- **Fig. 3**: ein Ausführungsbeispiel einer nicht erfindungsgemäßen optischen Messeinrichtung,
- **Fig. 4**: eine Detailansicht eines Ausführungsbeispiels einer erfindungsgemäßen optischen Messeinrichtung mit einem optischen Wellenleiter,
- **Fig. 5**: eine Detailansicht eines Ausführungsbeispiels einer erfindungsgemäßen optischen Messeinrichtung mit einem Sekundärspiegel mit strukturierten Abschnitten,
- **Fig. 6**: eine Detailansicht eines erfindungsgemäßen Sekundärspiegels mit strukturierten Abschnitten,
- **Fig. 7a**: eine Detailansicht eines erfindungsgemäßen Strahlungsdetektors in Draufsicht,
- **Fig. 7b**: eine Detailansicht eines erfindungsgemäßen Strahlungsdetektors in Draufsicht,
- **Fig. 7c**: eine Detailansicht eines erfindungsgemäßen Mehrkanaldetektors in Draufsicht,
- **Fig. 8**: eine Detailansicht eines erfindungsgemäßen Primärspiegels und eines erfindungsgemäßen Sekundärspiegels jeweils mit strukturierten Abschnitten,
- **Fig. 9a**: eine Detailansicht eines erfindungsgemäßen Strahlungsdetektors in Draufsicht,
- **Fig. 9b**: eine Detailansicht eines erfindungsgemäßen Strahlungsdetektors in Draufsicht,
- **Fig. 9c**: eine Detailansicht eines erfindungsgemäßen Mehrkanaldetektors in Draufsicht,
- **Fig. 10**: eine Detailansicht eines Ausführungsbeispiels einer nicht erfindungsgemäßen optischen Messeinrichtung mit einem Strahlteiler und einem zweiten Strahlungsdetektor.

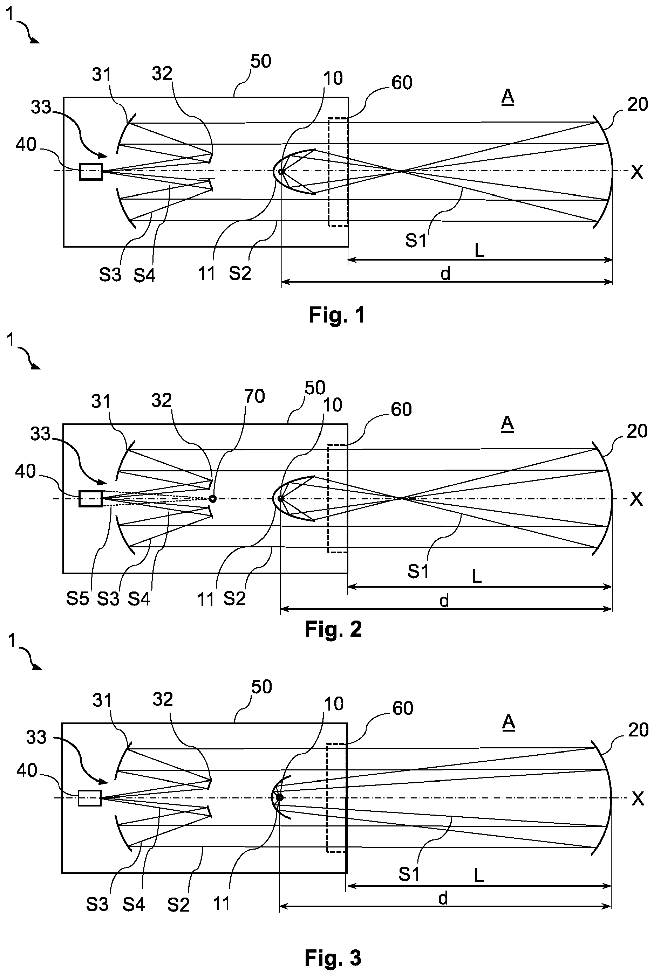

In Fig. 2, 4, 5 und 10 sind optische Messeinrichtungen 1 bzw. Detailansichten von erfindungsgemäßen optischen Messeinrichtungen 1 dargestellt.

Die optische Messeinrichtung 1 dient zur Konzentrationsbestimmung von Messgas in einem Probegas durch Lichtabsorption.

Die optische Messeinrichtung 1 umfasst dabei, wie in Fig. 1 2, 3, 4, 5 und 10 schematisch dargestellt, eine Lichtquelle 10, einen Umlenkspiegel 20, einen Primärspiegel 31, einen Sekundärspiegel 32 und einen Strahlungsdetektor 40.

Die Lichtquelle 10 ist dazu eingerichtet, Licht in Richtung des Umlenkspiegels 20 abzustrahlen. Beispielsweise kann die Lichtquelle 10 eine Glühlampe oder eine lichtemittierende Diode sein und ferner einen Reflektor 11 aufweisen. Der Reflektor 11 kann, wie in Fig. 1, 2 gezeigt, beispielsweise ein elliptischer Reflektor 11 oder, wie in Fig. 3 gezeigt, beispielsweise ein näherungsweise sphärischer Reflektor 11 sein. Der optionale Reflektor 11 dient dazu, das Licht in Richtung des Umlenkspiegels 20 zu bündeln.

Das von der Lichtquelle 10 in Richtung des Umlenkspiegels 20 abgestrahlte und ggf. mit Hilfe des Reflektors 11 gebündelte Licht ist in Fig. 1, 2, 3 als schematischer Strahl S1 dargestellt.

Ein Abschnitt A zwischen Lichtquelle 10 und Umlenkspiegel 20 ist eingerichtet, das Probegas aufzunehmen. Der Abschnitt A kann beispielsweise durch eine Messküvette oder durch ein offenes Messsystem, wie eingangs beschrieben, bereitgestellt werden. Der Abschnitt A weist, da das Licht diesen vorteilhaft zweimal durchläuft, eine optische Weglänge 2*L auf, wobei L die Länge des Abschnitts A angibt. Die optische Weglänge 2*L wird auch als Absorptionslänge bezeichnet.

Der Umlenkspiegel 20 ist eingerichtet, als Kollimator für einfallendes Licht, beispielsweise für den schematischen Strahl S1, zu wirken und das einfallende Licht, beispielsweise den schematischen Strahl S1, in Richtung des Primärspiegels 31 umgelenkt zu reflektieren. Das so umgelenkte Licht ist in Fig. 1, 2, 3, 4 und 5 als schematischer Strahl S2 dargestellt. Wie in diesen Figuren dargestellt ist, wird das in Richtung des Primärspiegels 31 umgelenkte Licht aufgrund der Wirkung des Umlenkspiegels 20 als Kollimator im Wesentlichen parallel zu einer optischen Achse X des Umlenkspiegels 20 reflektiert.

Der Primärspiegel 31 und der Sekundärspiegel 32 sind eingerichtet, das von dem Umlenkspiegel 20 umgelenkte Licht, beispielsweise den schematischen Strahl S2, auf den Strahlungsdetektor 40 zu lenken.

Durch Bereitstellung des Primärspiegels 31 und des Sekundärspiegels 32 und somit durch Bereitstellung einer Teleskopanordnung kann eine kompakte Bauweise der optischen Messeinrichtung 1 bei gleichzeitig hoher Brennweite erreicht werden.

In den dargestellten Ausführungsbeispielen nach Fig. 2, 4, 5 und 10 sind die jeweiligen optischen Achsen X von Lichtquelle 10, Umlenkspiegel 20, Primärspiegel 31 und Sekundärspiegel 32 kollinear zueinander ausgebildet.

Dies führt, wie eingangs beschrieben, zu einer Faltung des Strahlengangs in sich selbst. Dies ist in den dargestellten Fig. 1, 2, 3, 4, 5 und 10 anhand des schematischen Strahlengangs ersichtlich. Das von dem Umlenkspiegel 20 umgelenkte Licht, das schematisch als Strahl S2 dargestellt ist, fällt auf den Primärspiegel 31, welcher den Strahl S2, beispielsweise als Strahl S3, in Richtung des Sekundärspiegels 32 reflektiert. Sekundärspiegel 32 wiederum reflektiert den Strahl S3, beispielsweise als Strahl S4, in Richtung des Strahlungsdetektors 40. Strahlen S2, S3 und S4 werden dabei, wie in den genannten Figuren ersichtlich, in sich gefaltet. Somit kann bei kompakter Bauweise und hoher Brennweite vorteilhaft eine symmetrische Einfallswinkelverteilung erzeugt werden.

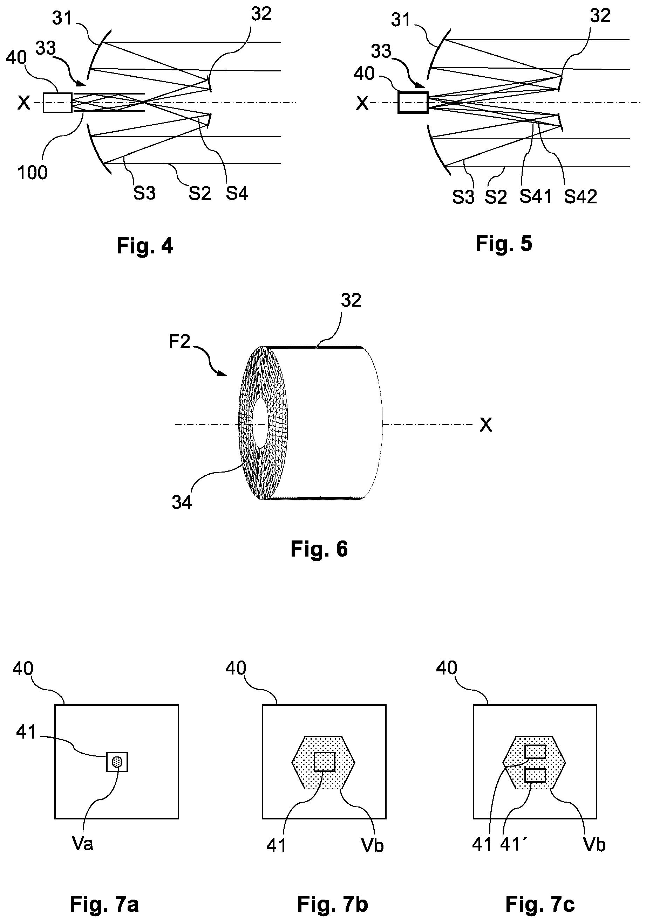

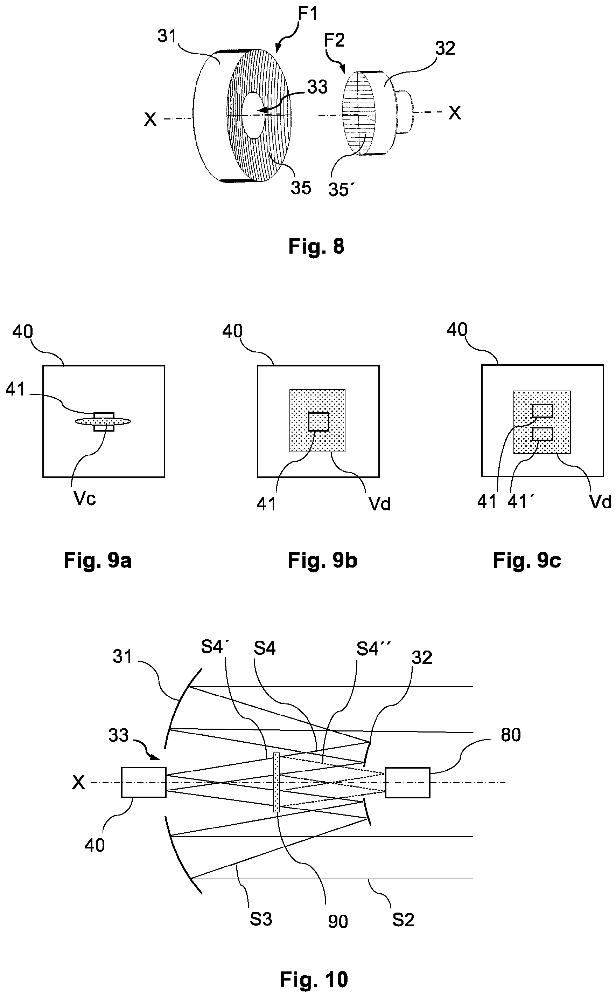

Der Strahlungsdetektor 40 ist dazu eingerichtet, Licht im ultravioletten und/oder im infraroten Wellenlängenbereich zu detektieren, wozu der Strahlungsdetektor 40 wenigstens ein Detektorelement 41, schematisch dargestellt in Fig. 7a, 7b, 7c und 9a, 9b, 9c aufweist. In einer bevorzugten Ausgestaltung der Erfindung kann der Strahlungsdetektor 40 ein Mehrkanaldetektor sein, der neben dem Detektorelement 41 wenigstens ein weiteres Detektorelement 41' aufweist. Ein derartiger Mehrkanaldetektor ist schematisch in Fig. 7c, 9c und in Fig. 4, 5, 10 dargestellt.

Bevorzugt und in Fig. 1, 2, 3, 4, 5 und 10 dargestellt ist, dass der Strahlungsdetektor 40 derart angeordnet ist, dass das Detektorelement 41 und ggf. das weitere Detektorelement 41' in einem Fokus oder einer Fokalebene des Strahlengangs liegt. Dies kann durch geeignete Beabstandung des Strahlungsdetektors 40 von dem Sekundärspiegel 32 erreicht werden. Dass das Detektorelement 41 und ggf. das weitere Detektorelement 41' in einem Fokus oder einer Fokalebene des Strahlengangs liegen ist jedoch nicht erforderlich.

Es ist in Fig. 1, 2, und 3 schematisch dargestellt, dass die Lichtquelle 10, der Primärspiegel 31, der Sekundärspiegel 32 und der Strahlungsdetektor 40 in einem gemeinsamen Gehäuse 50 angeordnet sind, wobei der Umlenkspiegel 20 außerhalb des Gehäuses 50 angeordnet ist. Das Gehäuse 50 umfasst in dieser bevorzugten Ausgestaltung ein lichtdurchlässiges Fenster 60, das im Strahlengang zwischen Lichtquelle 10 und Umlenkspiegel 20 angeordnet ist, um den Strahlengang nicht zu behindern, aber das Gehäuse körperlich nach außen abzuschließen. In den dargestellten Ausführungsbeispielen ist das Fenster 60 folglich eingerichtet, die beispielhaften Strahlen S1 und S2 zu transmittieren. Bevorzugt ist das Gehäuse 50 druckfest gekapselt und das Fenster 60 gasdicht gegenüber dem Gehäuse 50 abgedichtet.

In allen dargestellten Ausführungsbeispielen der optischen Messeinrichtung 1 kann ein Abstand d (dargestellt in Fig. 1, 2, 3) zwischen Lichtquelle 10 und Umlenkspiegel 20 entlang der optischen Achse X des Umlenkspiegels 20 veränderlich sein, um die Absorptionslänge anzupassen. Dies kann beispielsweise durch längenveränderliche Aufnahme des Umlenkspiegels 20 gegenüber dem Gehäuse 50 erreicht werden, beispielsweise durch Linearführung des Umlenkspiegels 20 in einem gehäuseseitigen Abstandshalter.

Vorzugsweise ist der Umlenkspiegel 20 in den dargestellten Ausführungsbeispielen hinsichtlich seiner Krümmung veränderlich, wie dies eingangs beschrieben wurde.

In den dargestellten Ausführungsbeispielen nach Fig. 2, 3, 4, 5, und 10 können der Primärspiegel 31 und der Sekundärspiegel 32 als eine Cassegrain-Teleskopanordnung ausgebildet sein, welche eine besonders hohe Brennweite bei kompakter Bauform ermöglicht.

In den dargestellten Ausführungsbeispielen nach Fig. 2, 3, 4, 5 und 10 weist der Primärspiegel 31 zur Verlängerung der Brennweite außerdem vorzugsweise eine mittige Aussparung 33 auf, um das von dem Sekundärspiegel 32 umgelenkte Licht, beispielsweise den Strahl S4, durch die mittige Aussparung 33 hindurch auf den Strahlungsdetektor 40 zu lenken.

In Fig. 2 ist dargestellt, dass die erfindungsgemäße optische Messeinrichtung 1 außerdem eine zweite Lichtquelle 70 umfasst, die eingerichtet ist, ein zweites Licht, in Fig. 2 schematisch als Strahl S5 dargestellt, in Richtung des Strahlungsdetektors 40 abzustrahlen. Die Bereitstellung einer zweiten Lichtquelle 70 erlaubt vorteilhaft die Kompensation einer Drift des Strahlungsdetektors 40.

Die zweite Lichtquelle 70 ist, wie dargestellt, kollinear zu dem Strahlungsdetektor 40 bereitgestellt, so dass der Strahlungsdetektor 40 im Wesentlichen senkrecht bestrahlt wird.

Bevorzugt und in Fig. 10 dargestellt ist, dass die optische Messeinrichtung 1 einen zweiten Strahlungsdetektor 80 und einen Strahlteiler 90 umfassen kann. Der Strahlteiler 90 kann im Strahlengang vor dem Strahlungsdetektor 40 angeordnet sein, um einen Teil des Lichts, beispielsweise des Strahls S4, in Richtung des Strahlungsdetektors 40 zu leiten, beispielsweise als schematischen Strahl S4', und einen anderen Teil des Lichts in Richtung des zweiten Strahlungsdetektors 90 zu leiten, beispielsweise als schematischen Strahl S4".

In Fig. 10 ist der Strahlteiler 90 beispielsweise als ein dichroitischer oder trichroitischer Strahlteiler ausgebildet.

In Fig. 6, 8 sind Beispiele eines erfindungsgemäßen Primärspiegels 31 und erfindungsgemäßer Sekundärspiegel 32 dargestellt. Wie in diesen Figuren ersichtlich ist, können Primärspiegel 31 und Sekundärspiegel 32 beispielsweise als im Wesentlichen zylindrische Grundkörper hergestellt werden, die eine optische Fläche F1 bzw. F2 aufweisen. Primärspiegel 31 und Sekundärspiegel 32 können jedoch auch auf eine beliebige andere Weise bereitgestellt werden, solange sie eine optische Fläche F1 bzw. F2 aufweisen.

Wie in Fig. 6, 8 dargestellt, kann eine optische Fläche F2 des Sekundärspiegels 32 und/oder eine optische Fläche F1 des Primärspiegels 32 strukturierte Abschnitte 34, 35 aufweisen, um eine Strahlenverteilung - in Fig. 7a, 7b, 7c und 9a, 9b, 9c schematisch dargestellt als Flächen Va, Vb, Vc, Vd - auf dem Strahlungsdetektor 40 und/oder dem zweiten Strahlungsdetektor 80 zu beeinflussen, insbesondere die Strahlenverteilung Va, Vb, Vc, Vd zu vergrößern.

Die strukturierten Abschnitte 34, 35 können beispielsweise als Facetten 34 und/oder als Rillen 35 ausgebildet sein.

In dem in Fig. 6 dargestellten Beispiel weist die optische Fläche F2 des Sekundärspiegels 32 strukturierte Abschnitte 34 in Form von Facetten 34 auf.

In dem in Fig. 8 dargestellten Beispiel weist der Primärspiegel 31 strukturierte Abschnitte 35 in Form von Rillen 35 auf, die in einer ersten Orientierung parallel zueinander verlaufen und der Sekundärspiegel 32 weist strukturierte Abschnitte 35' in Form von Rillen 35' auf, die in einer zweiten Orientierung parallel zueinander verlaufen. Wie dargestellt können der Primärspiegel 31 und der Sekundärspiegel 32 so zueinander ausgerichtet sein, dass die erste Orientierung und die zweite Orientierung im Wesentlichen senkrecht zueinander sind.

In Fig. 7a ist schematisch eine Strahlenverteilung Va dargestellt, wie sie mit einer optischen Messeinrichtung 1 erzeugt wird, in der weder Primärspiegel 31 noch Sekundärspiegel 32 strukturierte Abschnitte 34, 35, 35' aufweisen. Die Strahlenverteilung Va ist in diesem Fall im Wesentlichen kreisförmig.

In Fig. 7b, 7c sind schematische Strahlenverteilungen Vb dargestellt, wie sie mit einer optischen Messeinrichtung 1 erzeugt werden, in welcher der Primärspiegel 31 und/oder der Sekundärspiegel 32 strukturierte Abschnitte 34 in Form von Facetten 34 aufweisen. Die Strahlenverteilung Vb ist in diesem Fall vergrößert gegenüber dem in Fig. 7a gezeigten Beispiel. Die Strahlenverteilung Vb entspricht in der Ebene des Detektorelements 41 beispielsweise einem Sechseck, für den Fall, dass lediglich der Primärspiegel 31 oder der Sekundärspiegel 32 strukturierte Abschnitte 34 in Form sechseckiger Facetten 34 aufweist.

In Fig. 5 ist in einer Detailansicht einer optischen Messeinrichtung 1 schematisch dargestellt, dass aufgrund der strukturierten Abschnitte 34, 35, 35' die Strahlenverteilung Va, Vb, Vc, Vd auf dem Strahlungsdetektor 40 und/oder dem zweiten Strahlungsdetektor 80 beeinflusst und insbesondere vergrößert werden kann. Dies ist schematisch anhand des Strahls S3 verdeutlicht, der nach Reflektion durch den Sekundärspiegel 32 als Strahlen S41, S42 auf den Strahlungsdetektor 40 fällt.

In Fig. 9a ist schematisch eine Strahlenverteilung Vc dargestellt, wie sie mit einer optischen Messeinrichtung 1 erzeugt wird, in der entweder der Primärspiegel 31 oder der Sekundärspiegel 32 strukturierte Abschnitte 35, 35' in Form vom Rillen 35, 35' aufweisen. Die Strahlenverteilung Vc entspricht in diesem beispielhaften Fall im Wesentlichen einer langgezogenen Ellipse.

In dem in Fig. 9b, 9c gezeigten beispielhaften Fall entspricht die Strahlenverteilung Vd im Wesentlichen einem Rechteck, für den in Fig. 8 gezeigten Fall, dass sowohl der Primärspiegel 31 als auch der Sekundärspiegel 32 die strukturierten Abschnitte 35, 35' in Form von Rillen 35, 35' und aufweisen.

In einer in Fig. 4 dargestellten Ausführungsform weist die optische Messeinrichtung 1 ferner einen optischen Wellenleiter 100 auf, der im Strahlengang vor dem Strahlungsdetektor 40 angeordnet ist. In dem in Fig. 4 dargestellten Beispiel ist der optische Wellenleiter 100 ein Hohlleiter. Innerhalb des optischen Wellenleiters 100 kommt es zu Mehrfachreflektionen des einfallenden Lichts, beispielsweise des schematischen Strahls S4, und somit vorteilhaft zu einer Homogenisierung der Lichtverteilung auf dem Strahlendetektor 40 bzw. dessen Detektorelement 41 (oder Detektorelementen 41, 41').

Nicht dargestellt ist, dass die optische Messeinrichtung 1 ferner einen zweiten optischen Wellenleiter umfassen kann, der im Strahlengang vor dem zweiten Strahlungsdetektor 80 angeordnet sein kann.

Im Rahmen des durch die angehängten Ansprüche definierten Schutzumfangs, sind alle hierin offenbarten Merkmale beliebig miteinander kombinierbar, soweit dies nicht Alternativen betrifft oder widersprüchlich ist.

### Bezugszeichenliste

- 1: Optische Messeinrichtung
- 10: Lichtquelle
- 11: Reflektor
- 20: Umlenkspiegel
- 31: Primärspiegel
- 32: Sekundärspiegel
- 33: Aussparung
- 34, 35, 35': Strukturierte Abschnitte
- 40: Strahlungsdetektor
- 41, 41': Detektorelement
- 50: Gehäuse
- 60: Fenster
- 70: zweite Lichtquelle
- 80: zweiter Strahlungsdetektor
- 90: Strahlteiler
- 100: Optischer Wellenleiter

- A: Abschnitt
- d: Abstand
- F1, F2: Optische Fläche
- L: Länge des Abschnitts
- S1, S2, S3, S4, S4', S4", S5, S41, S42: Strahl
- Va, Vb, Vc, Vd: Strahlenverteilung
- X: Optische Achse

## Patentansprüche

1. Optische Messeinrichtung (1) zur Konzentrationsbestimmung von Messgas in einem Probegas durch Lichtabsorption, umfassend:
- eine Lichtquelle (10),
- einen Umlenkspiegel (20),
- einen Primärspiegel (31),
- einen Sekundärspiegel (32), und
- einen Strahlungsdetektor (40),
wobei ein Abschnitt (A) zwischen Lichtquelle (10) und Umlenkspiegel (20) eingerichtet ist, das Probegas aufzunehmen,
wobei die Lichtquelle (10) eingerichtet ist, Licht in Richtung des Umlenkspiegels (20) abzustrahlen,
wobei der Umlenkspiegel (20) eingerichtet ist, als Kollimator für einfallendes Licht zu wirken und das einfallende Licht in Richtung des Primärspiegels (31) umzulenken, und
wobei der Primärspiegel (31) und der Sekundärspiegel (32) eingerichtet sind, das von dem Umlenkspiegel (20) umgelenkte Licht auf den Strahlungsdetektor (40) zu lenken.
wobei jeweilige optische Achsen (X) von Lichtquelle (10), Umlenkspiegel (20), Primärspiegel (31) und Sekundärspiegel (32) kollinear zueinander ausgebildet sind.
wobei die Lichtquelle (10), der Primärspiegel (31), der Sekundärspiegel (32) und der Strahlungsdetektor (40) in einem gemeinsamen Gehäuse (50) angeordnet sind,
wobei der Umlenkspiegel (20) außerhalb des Gehäuses (50) angeordnet ist, und
wobei das Gehäuse (50) ein lichtdurchlässiges Fenster (60) umfasst, das im Strahlengang zwischen Lichtquelle (10) und Umlenkspiegel (20) angeordnet ist,
**dadurch gekennzeichnet, dass**
die optische Messeinrichtung (1) ferner eine zweite Lichtquelle (70) umfasst, die eingerichtet ist, ein zweites Licht in Richtung des Strahlungsdetektors (40) abzustrahlen,
wobei die zweite Lichtquelle (70) kollinear zu einer Mittelachse des Strahlungsdetektors (40) angeordnet ist.

2. Optische Messeinrichtung (1) nach Anspruch 1,
wobei ferner der Strahlungsdetektor (40) auf der optischen Achse (X) von Primärspiegel (31) und Sekundärspiegel (32) liegt.

3. Optische Messeinrichtung (1) nach Anspruch 1 oder 2,
wobei ein Abstand (d) zwischen Lichtquelle (10) und Umlenkspiegel (20) entlang der optischen Achse (X) des Umlenkspiegels (20) veränderlich ist, um eine Absorptionslänge anzupassen.

4. Optische Messeinrichtung (1) nach einem der vorherigen Ansprüche,
wobei der Primärspiegel (31) und der Sekundärspiegel (32) als eine Cassegrain-Teleskopanordnung ausgebildet sind.

5. Optische Messeinrichtung (1) nach Anspruch 4,
wobei die Cassegrain-Teleskopanordnung neben dem Primärspiegel (31) und dem Sekundärspiegel (32) keine weiteren optischen Elemente aufweist.

6. Optische Messeinrichtung (1) nach Anspruch 5,
wobei der Primärspiegel (31) eine mittige Aussparung (33) aufweist, um das von dem Sekundärspiegel (32) umgelenkte Licht durch die mittige Aussparung (33) hindurch auf den Strahlungsdetektor (40) zu lenken.

7. Optische Messeinrichtung (1) nach einem der vorherigen Ansprüche, ferner umfassend:
- einen zweiten Strahlungsdetektor (80), und
- einen Strahlteiler (90),
wobei der Strahlteiler (90) im Strahlengang vor dem Strahlungsdetektor (40) angeordnet ist, um einen Teil des Lichts in Richtung des Strahlungsdetektors (40) zu leiten und einen anderen Teil des Lichts in Richtung des zweiten Strahlungsdetektors (80) zu leiten.

8. Optische Messeinrichtung (1) nach einem der vorherigen Ansprüche, wobei der Strahlungsdetektor (40) und/oder der zweite Strahlungsdetektor (80) ein Mehrkanaldetektor ist.

9. Optische Messeinrichtung (1) nach einem der vorherigen Ansprüche,
wobei eine optische Fläche (F2) des Sekundärspiegels (32) und/oder eine optische Fläche (F1) des Primärspiegels (31) strukturierte Abschnitte (34, 35, 35') aufweist, um eine Strahlenverteilung (Va, Vb, Vc, Vd) auf dem Strahlungsdetektor (40) und/oder, im Fall des Anspruchs 7 oder 8, eine Strahlenverteilung (Va, Vb, Vc, Vd) auf dem zweiten Strahlungsdetektor (80) zu vergrößern.

10. Optische Messeinrichtung (1) nach Anspruch 9,
wobei die strukturierten Abschnitte (34, 35, 35') sphärisch, hyperbolisch oder parabolisch ausgebildet sind.

11. Optische Messeinrichtung (1) nach Anspruch 9,
wobei die strukturierten Abschnitte (34, 35, 35') als Facetten (34) und/oder als Rillen (35, 35') ausgebildet sind.

12. Optische Messeinrichtung (1) nach Anspruch 11,
wobei die Facetten (34) als sechseckige Erhöhung oder Ausnehmung ausgebildet sind,
wobei eine durch Kanten der Facette (34) begrenzte Facettenfläche konvex, konkav und/oder plan ausgebildet ist.

13. Optische Messeinrichtung (1) nach einem der vorherigen Ansprüche, ferner aufweisend einen optischen Wellenleiter (100), der im Strahlengang
vor dem Strahlungsdetektor (40) angeordnet ist.

## Claims

1. Optical measuring device (1) for determining the concentration of a measuring gas in a sample gas by light absorption, the device comprising:
- a light source (10),
- a deflecting mirror (20),
- a primary mirror (31),
- a secondary mirror (32), and
- a radiation detector (40),
wherein a portion (A) between the light source (10) and the deflecting mirror (20) is configured to receive the sample gas,
wherein the light source (10) is configured to emit light towards the deflecting mirror (20),
wherein the deflecting mirror (20) is configured to act as a collimator for incident light and to deflect the incident light towards the primary mirror (31), and
wherein the primary mirror (31) and the secondary mirror (32) are configured to direct the light deflected by the deflecting mirror (20) onto the radiation detector (40),
wherein the respective optical axes (X) of the light source (10), the deflecting mirror (20), the primary mirror (31), and the secondary mirror (32) are collinear with respect to each other,
wherein the light source (10), the primary mirror (31), the secondary mirror (32), and the radiation detector (40) are arranged in a common housing (50),
wherein the deflecting mirror (20) is arranged outside the housing (50), and
wherein the housing (50) comprises a light-permeable window (60) arranged in the beam path between the light source (10) and the deflecting mirror (20),
**characterized in that**
the optical measuring device (1) further comprises a second light source (70) configured to emit a second light towards the radiation detector (40),
wherein the second light source (70) is arranged so as to be collinear with respect to a central axis of the radiation detector (40).

2. Optical measuring device (1) according to claim 1,
wherein the radiation detector (40) is furthermore located on the optical axis (X) of the primary mirror (31) and the secondary mirror (32).

3. Optical measuring device (1) according to claim 1 or 2,
wherein a distance (d) between the light source (10) and the deflecting mirror (20) along the optical axis (X) of the deflecting mirror (20) is variable in order to adjust an absorption length.

4. Optical measuring device (1) according to any of the preceding claims,
wherein the primary mirror (31) and the secondary mirror (32) are in the form of a Cassegrain telescope arrangement.

5. Optical measuring device (1) according to claim 4,
wherein the Cassegrain telescope arrangement has no further optical elements besides the primary mirror (31) and the secondary mirror (32).

6. Optical measuring device (1) according to claim 5,
wherein the primary mirror (31) has a central cutout (33) in order to direct the light deflected by the secondary mirror (32) through the central cutout (33) and onto the radiation detector (40).

7. Optical measuring device (1) according to any of the preceding claims, further comprising:
- a second radiation detector (80), and
- a beam splitter (90),
wherein the beam splitter (90) is arranged upstream of the radiation detector (40) in the beam path in order to guide one part of the light towards the radiation detector (40) and to guide another part of the light towards the second radiation detector (80).

8. Optical measuring device (1) according to any of the preceding claims,
wherein the radiation detector (40) and/or the second radiation detector (80) is a multi-channel detector.

9. Optical measuring device (1) according to any of the preceding claims,
wherein an optical surface (F2) of the secondary mirror (32) and/or an optical surface (F1) of the primary mirror (31) has structured portions (34, 35, 35') in order to increase a beam distribution (Va, Vb, Vc, Vd) on the radiation detector (40) and/or, in the case of claim 7 or 8, a beam distribution (Va, Vb, Vc, Vd) on the second radiation detector (80).

10. Optical measuring device (1) according to claim 9,
wherein the structured portions (34, 35, 35') are spherical, hyperbolic or parabolic.

11. Optical measuring device (1) according to claim 9,
wherein the structured portions (34, 35, 35') are designed as facets (34) and/or as grooves (35, 35').

12. Optical measuring device (1) according to claim 11,
wherein the facets (34) are in the form of hexagonal elevations or recesses,
wherein a facet surface bounded by edges of the facet (34) is convex, concave and/or planar.

13. Optical measuring device (1) according to any of the preceding claims,
further having an optical waveguide (100) arranged upstream of the radiation detector (40) in the beam path.

## Revendications

1. Dispositif de mesure optique (1) pour la détermination de la concentration de gaz de mesure dans un gaz d'échantillonnage par absorption de lumière, comprenant :
- une source lumineuse (10),
- un miroir de déviation (20),
- un miroir primaire (31),
- un miroir secondaire (32), et
- un détecteur de rayonnement (40),
dans lequel une section (A) entre la source lumineuse (10) et le miroir de déviation (20) est conçue pour recevoir le gaz d'échantillonnage,
dans lequel la source lumineuse (10) est configurée pour émettre de la lumière en direction du miroir de déviation (20),
dans lequel le miroir de déviation (20) est conçu pour agir comme un collimateur pour la lumière incidente et pour dévier la lumière incidente en direction du miroir primaire (31), et
dans lequel le miroir primaire (31) et le miroir secondaire (32) sont conçus pour diriger la lumière déviée par le miroir de déviation (20) sur le détecteur de rayonnement (40),
dans lequel des axes optiques (X) respectifs de la source lumineuse (10), du miroir de déviation (20), du miroir primaire (31) et du miroir secondaire (32) sont réalisés de manière colinéaire les uns par rapport aux autres,
dans lequel la source lumineuse (10), le miroir primaire (31), le miroir secondaire (32) et le détecteur de rayonnement (40) sont disposés dans un boîtier (50) commun,
dans lequel le miroir de déviation (20) est disposé à l'extérieur du boîtier (50), et
dans lequel le boîtier (50) comprend une fenêtre (60) transparente vis-à-vis la lumière qui est disposée dans le trajet de faisceau entre la source lumineuse (10) et le miroir de déviation (20),
**caractérisé en ce que**
le dispositif de mesure optique (1) comprend en outre une seconde source lumineuse (70) qui est configurée pour émettre une seconde lumière en direction du détecteur de rayonnement (40),
dans lequel la seconde source lumineuse (70) est disposée de manière colinéaire par rapport à un axe central du détecteur de rayonnement (40).

2. Dispositif de mesure optique (1) selon la revendication 1,
dans lequel, en outre, le détecteur de rayonnement (40) est situé sur l'axe optique (X) du miroir primaire (31) et du miroir secondaire (32).

3. Dispositif de mesure optique (1) selon la revendication 1 ou 2,
dans lequel une distance (d) entre la source lumineuse (10) et le miroir de déviation (20) est variable le long de l'axe optique (X) du miroir de déviation (20) afin d'adapter une longueur d'absorption.

4. Dispositif de mesure optique (1) selon l'une des revendications précédentes,
dans lequel le miroir primaire (31) et le miroir secondaire (32) sont réalisés comme un agencement de télescope de type Cassegrain.

5. Dispositif de mesure optique (1) selon la revendication 4,
dans lequel l'agencement de télescope de type Cassegrain ne présente pas d'autres éléments optiques outre le miroir primaire (31) et le miroir secondaire (32).

6. Dispositif de mesure optique (1) selon la revendication 5,
dans lequel le miroir primaire (31) présente un évidement central (33) pour diriger la lumière déviée par le miroir secondaire (32) à travers l'évidement central (33) sur le détecteur de rayonnement (40).

7. Dispositif de mesure optique (1) selon l'une des revendications précédentes, comprenant en outre :
- un second détecteur de rayonnement (80), et
- un séparateur de faisceaux (90),
dans lequel le séparateur de faisceaux (90) est disposé dans le trajet de faisceau en amont du détecteur de rayonnement (40) pour diriger une partie de la lumière en direction du détecteur de rayonnement (40) et pour diriger une autre partie de la lumière en direction du second détecteur de rayonnement (80).

8. Dispositif de mesure optique (1) selon l'une des revendications précédentes,
dans lequel le détecteur de rayonnement (40) et/ou le second détecteur de rayonnement (80) est un détecteur multicanal.

9. Dispositif de mesure optique (1) selon l'une des revendications précédentes,
dans lequel une surface optique (F2) du miroir secondaire (32) et/ou une surface optique (F1) du miroir primaire (31) présentent des sections structurées (34, 35, 35') pour augmenter une distribution de rayons (Va, Vb, Vc, Vd) sur le détecteur de rayonnement (40) et/ou, dans le cas de la revendication 7 ou 8, une distribution de rayons (Va, Vb, Vc, Vd) sur le second détecteur de rayonnement (80).

10. Dispositif de mesure optique (1) selon la revendication 9,
dans lequel les sections structurées (34, 35, 35') sont réalisées sous forme sphérique, hyperbolique ou parabolique.

11. Dispositif de mesure optique (1) selon la revendication 9,
dans lequel les sections structurées (34, 35, 35') sont réalisées sous forme de facettes (34) et/ou de rainures (35, 35').

12. Dispositif de mesure optique (1) selon la revendication 11,
dans lequel les facettes (34) sont réalisées sous la forme d'une élévation ou d'un évidement hexagonal,
dans lequel une surface de facette délimitée par des arêtes de la facette (34) est réalisée sous forme convexe, concave et/ou plane.

13. Dispositif de mesure optique (1) selon l'une des revendications précédentes,
présentant en outre un guide d'ondes optique (100) qui est disposé dans le trajet de faisceau en amont du détecteur de rayonnement (40).
